# FASCICULE DE BREVET EUROPEEN

(11) **EP 2 713 083 B1**
(45) Date de publication et mention de la délivrance du brevet: **28.01.2015**
(21) Numéro de dépôt: 13306310.7
(22) Date de dépôt: 25.09.2013
(51) Int. Cl.: F16K 11/085, F16K 5/04, F16K 11/074

(54) **Vanne de distribution et de régulation à boisseau rotatif**
Verteilungs- und Regulierventil mit Drehhahn
Feed and control valve with rotary slide valve

(30) Priorité: 27.09.2012 FR 1259091
(43) Date de publication de la demande: 02.04.2014
(73) Titulaire: Systèmes Moteurs (Société par Actions Simplifiée), 92300 Levallois-Perret (FR)
(72) Inventeur: Becker, Nicolas, 68000 COLMAR (FR)
(74) Mandataire: Nuss, Laurent

(56) Documents cités:
- DE-C1- 19 632 533
- JP-A- 2002 106 347
- JP-A- 2003 222 252

## Description

La présente invention concerne le domaine des dispositifs de contrôle de la circulation et de la régulation du flux de liquide circulant dans des circuits mutuellement interconnectés et/ou imbriqués entre eux, notamment dans le contexte des circuits de refroidissement des véhicules à moteur à combustion interne.

Plus précisément, l'invention concerne une vanne de distribution et de régulation de fluide dans un circuit de circulation de liquide de refroidissement comprenant au moins une telle vanne.

Les vannes du type précité présentent toutes sensiblement la même constitution globale, à savoir un corps de vanne avec une chambre et plusieurs ouvertures d'entrée ou de sortie de fluide (en fonction des circuits connectés) et une ou plusieurs pièces (boisseaux, tiroirs ou analogues) mobiles dans ce corps creux, dont la position (en combinaison avec leur constitution particulière) détermine le cheminement du fluide dans la chambre, entre les différentes ouvertures.

Ces vannes connues font généralement partie de l'un des deux types suivants, en fonction de la nature du déplacement de la ou des pièces mobiles : la vanne à boisseau translatif (vanne à tiroir) et les vannes à boisseau rotatif.

Bien que leur étanchéité et leur gestion de la distribution soient plus aisées à réaliser, un des inconvénients majeurs des vannes à boisseau translatif réside dans la nécessité de devoir disposer d'un dégagement suffisant dans la direction de translation. Il en résulte une dimension importante dans cette direction, ce qui limite leur utilisation dans un environnement à dimensions restreintes, notamment sous capot moteur.

De plus, du fait du séquencement linéaire des configurations de distribution, on aboutit à une faible modularité et à une flexibilité limitée liées, le cas échéant, à une réactivité inadaptée en situation d'urgence (déplacement important pour commuter entre deux configurations non consécutives dans le séquencement).

En outre, ce type de vanne linéaire ne peut généralement être monté qu'en sortie moteur.

Du fait de ces limitations des vannes linéaires, de nombreuses constructions de vannes à boisseaux rotatifs ont été proposées.

Ce dernier type de vannes est généralement caractérisé par un axe de rotation de la ou des pièces mobiles (qui définissent le chemin de circulation du fluide dans le corps de vanne et entre les ouvertures) et par la nature de cette ou ces pièce(s), à savoir un boisseau volumique, généralement cylindrique, creux et/ou ajouré (voir par exemple FR 2 827 358, FR 2 940 396, EP 1 448 877, WO 2008/053089) ou un ou des disques découpés ou perforés (voir par exemple FR 2 801 658, GB2051 311, FR 2 827 356).

En outre, ces vannes se différencient également entre elles par la localisation des ouvertures d'entrée/sortie régulées du corps de vanne par rapport à l'axe de rotation.

Ainsi, certaines vannes à boisseaux rotatifs ne présentent que des ouvertures radiales ou latérales, c'est-à-dire débouchant dans le corps de vanne selon une direction perpendiculaire à l'axe de rotation (cf. WO 2008/053089, FR 2 827 358, FR 2 940 396 et GB 2 051 311), d'autres uniquement des ouvertures axiales ou longitudinales, c'est-à-dire débouchant dans le corps de vanne selon une direction parallèle à l'axe de rotation (cf. FR 2 827 356) et, enfin, certaines des ouvertures des deux types précités (cf. FR 2 817 011 et FR 2 800 125), les passages au niveau de ces ouvertures étant ou non régulés par l'organe rotatif.

Bien entendu, les deux premiers types de vannes rotatives précités sont plus limités en termes de possibilités d'implantation et le troisième type est généralement préféré lorsqu'une grande variété de positionnements de branchement doit être à disposition.

Un problème récurrent et délicat dans ce type de vannes concerne la réalisation de l'étanchéité au niveau des ouvertures du corps de vanne entre les différentes voies et entre la chambre du corps de vanne et l'extérieur. En particulier, l'absence ou la quasi-absence de fuites à l'état obturé des ouvertures est délicate à réaliser.

Ce problème d'étanchéité est particulièrement complexe à solutionner de manière satisfaisante dans le cadre du troisième type de vanne précité (à ouvertures régulées radiale(s) et axiale(s)), et les solutions simples existantes d'étanchéité pour les ouvertures radiales (cf. EP 1 085 181, EP 1 448 877, EP 1 113 203) sont généralement incompatibles avec ou inadaptées pour l'étanchéisation d'une ouverture axiale régulée. JP2002106347 décrit une vanne selon le préambule de la revendication 1.

Par ailleurs, se pose de manière générale le problème complexe de la réalisation d'étanchéités performantes et résistant à l'usure dans le temps (mouvements répétés du boisseau), tout en limitant le couple nécessaire à la rotation du boisseau.

La présente invention a pour objet de surmonter ces limitations et de proposer une vanne à boisseau rotatif, à ouvertures radiale(s) et axiale(s) régulées et présentant une étanchéité performante, durable et à constitution relativement simple et peu coûteuse pour toutes les ouvertures.

A cet effet, l'invention a pour objet une vanne de distribution et de régulation de fluide, essentiellement constituée par un corps de vanne creux définissant une chambre intérieure et par un boisseau creux dont la face externe de la paroi définit au moins partiellement une surface de révolution et qui est monté avec faculté de rotation autour de son axe médian dans la chambre dudit corps de vanne, ce corps de vanne comportant une première ouverture latérale ou radiale pour l'entrée ou la sortie de fluide dans ou de la chambre, dont le passage n'est pas contrôlé par le boisseau, et au moins une ouverture axiale et au moins des deuxième et troisième ouvertures radiales ou latérales pour la sortie ou l'entrée de fluide de ou dans la chambre, dont les passages sont contrôlés par le boisseau et dépendent de la position en rotation de ce dernier, la paroi du boisseau étant pourvue de découpes pouvant être positionnées en regard des deuxième et troisième ouvertures radiales par rotation dudit boisseau et déterminant des séquences d'ouverture et de fermeture desdites ouvertures radiales en fonction du déplacement en rotation du boisseau,
vaime caractérisée en ce que la paroi cylindrique du boisseau est située radialement à distance de la paroi du corps de vanne, en ce que les deuxième et troisième ouvertures radiales comportent des moyens d'étanchéité faisant saillie dans la chambre de distribution et venant en appui glissant sous contrainte sur ladite paroi cylindrique du boisseau et en ce que ledit boisseau est pourvu, en regard de l'ouverture axiale, d'une plaque rapportée pourvue d'au moins une découpe et venant en appui étanche sous contrainte sur un insert ou une contre-plaque ajouré(e) délimitant et/ou entourant au moins les contours de l'entrée de l'ouverture axiale débouchant dans la chambre de distribution.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue en coupe schématique, selon un plan de coupe intégrant l'axe de rotation du boisseau, illustrant un premier mode de réalisation d'une vanne selon l'invention (pour un montage en sortie moteur) ;
La figure 2 est une vue en coupe schématique, selon un autre plan de coupe intégrant l'axe de rotation du boisseau, d'une variante de réalisation de la vanne de la figure 1, comportant une solution alternative pour réaliser l'étanchéité de l'ouverture axiale à passage contrôlé ;
La figure 3A est une vue en coupe similaire à celle de la figure 1, illustrant un autre mode de réalisation d'une vanne selon l'invention, plus particulièrement adapté pour un montage en entrée moteur, avec une autre variante de réalisation de l'étanchéité de l'ouverture axiale ;
la figure 3B est une vue en coupe schématique simplifiée, similaire à celle de la figure 3A, illustrant une autre variante de réalisation de l'étanchéité au niveau de l'ouverture axiale ;
Les figures 4 et 5 sont des vues schématiques en coupe, selon un plan perpendiculaire à l'axe de rotation du boisseau et au niveau de l'une des ouvertures radiales du corps de vanne de la vanne représentée figure 1 ou 3 (figure 4 : ouverture entièrement libérée / figure 5 : ouverture obturée) ;
Les figures 6A et 6B sont des vues en perspective selon deux directions différentes d'une pièce bi-matière monobloc formant les moyens d'étanchéité des ouvertures radiales de la vanne représentée figures 1, 3, 4 et 5, selon une première variante de réalisation de l'invention ;
La figure 7 est une vue en coupe d'une pièce composite bicomposante formant les moyens d'étanchéité des ouvertures radiales de la vanne représentée figures 1, 3, 4 et 5, selon une seconde variante de réalisation de l'invention ;
Les figures 8A et 8B sont des vues en coupe, similaires à celles de la figure 1, d'une réalisation pratique d'une vanne telle que ressortant schématiquement de la figure 1, avec deux variantes d'exécution de l'étanchéité axiale (figure 8A : insert fixe surmoulé par la matière du corps de vanne / figure 8B : contre-plaque fixe assemblé au corps de vanne avec joint interposé), la paroi du boisseau comportant les découpes définissant une surface extérieure cylindrique circulaire ;
Les figures 8C et 8D sont des vues en perspective respectivement, d'une part, de la plaque rapportée sur le boisseau et, d'autre part, de l'insert intégré dans le corps de vanne ou de la contre-plaque assemblée avec ce dernier, ces éléments faisant partie de la vanne représentée figure 8A ou 8B ;
Les figures 9A à 9C illustrent les étapes de fabrication d'un exemple de réalisation d'un corps de vanne faisant partie d'une vanne telle que représentée figures 1, 4, 5, 8A et 8B ;

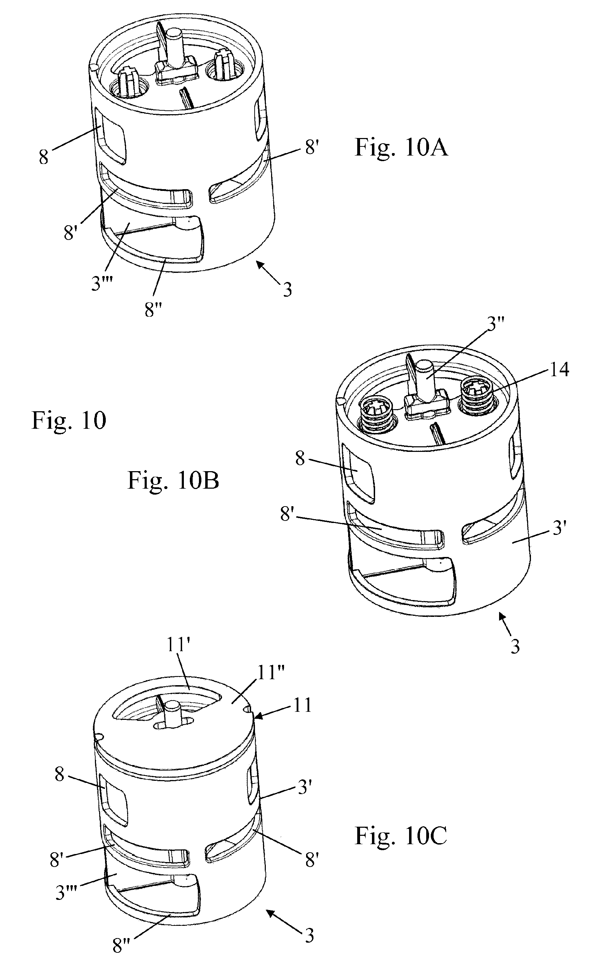

Les figures 10A à 10C illustrent les étapes de fabrication d'un exemple de boisseau rotatif faisant partie d'une vanne telle que représentée figures 1, 4, 5, 8A et 8B, adapté pour un montage dans le corps de vanne de la figure 9C et présentant une constitution cylindrique circulaire ;
Les figures 11A et 11B illustrent deux autres étapes d'un exemple de fabrication d'une vanne telle que représentée figures 1, 4, 5, 8A et 8B, à savoir le montage du boisseau de la figure 10C dans le corps de vanne de la figure 9C (figure 11A) et le montage de l'actionneur sur le corps de vanne (figure 11B);
La figure 11C est une vue en perspective d'une vanne du type représenté sur les figures 11A et 11B, selon une variante de réalisation pratique de l'invention ;
La figure 12 est une vue en coupe similaire à celle des figures 1 à 3 (c'est-à-dire selon un plan de coupe intégrant l'axe de rotation du boisseau), illustrant un autre mode de réalisation du boisseau et de l'étanchéité radiale (boisseau définissant une surface extérieure de révolution à secteurs sphériques, partiellement sous forme de deux tores empilés), l'actionneur et les moyens d'étanchéité axiale n'étant pas représentés ;
La figure 13 est une vue partielle en perspective de la vanne de la figure 12, montrant le boisseau et le dispositif combiné d'étanchéité radiale ;
Les figures 14A et 14B sont des vues en coupe respectivement des moyens d'étanchéité radiale (Fig. 14A) et du boisseau (Fig. 14B) représentés figures 12 et 13, et,
Les figures 15A et 15B sont des représentations schématiques et fluidiques de deux modes de réalisation d'un circuit de refroidissement d'un véhicule à moteur à combustion interne intégrant une vanne selon l'invention, cette dernière étant montée en sortie moteur (figure 15A) ou en entrée moteur (figure 15B).

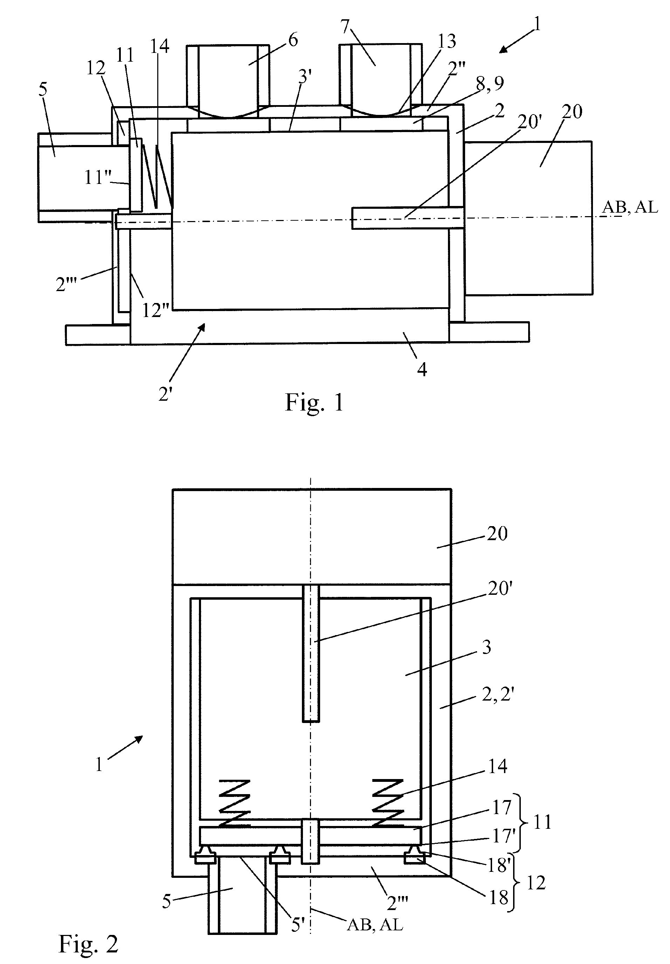

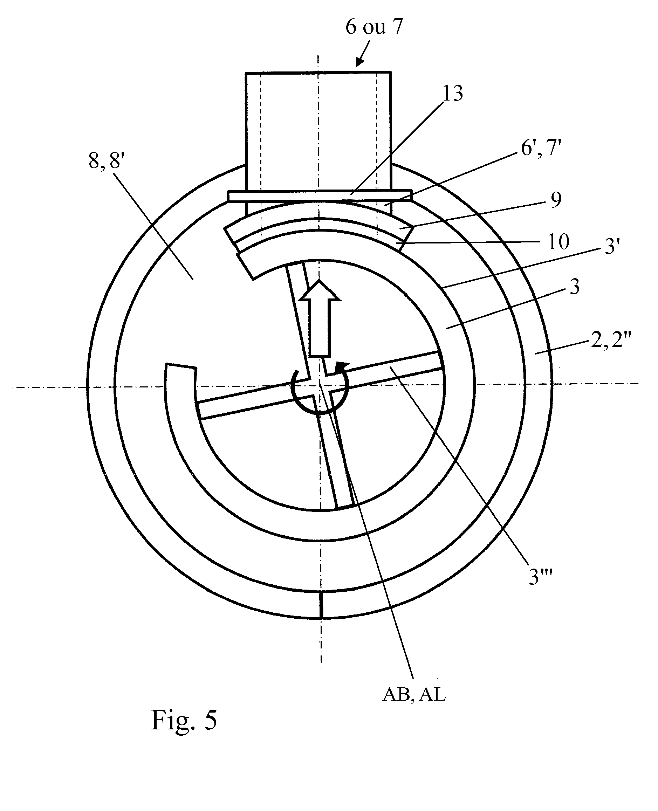

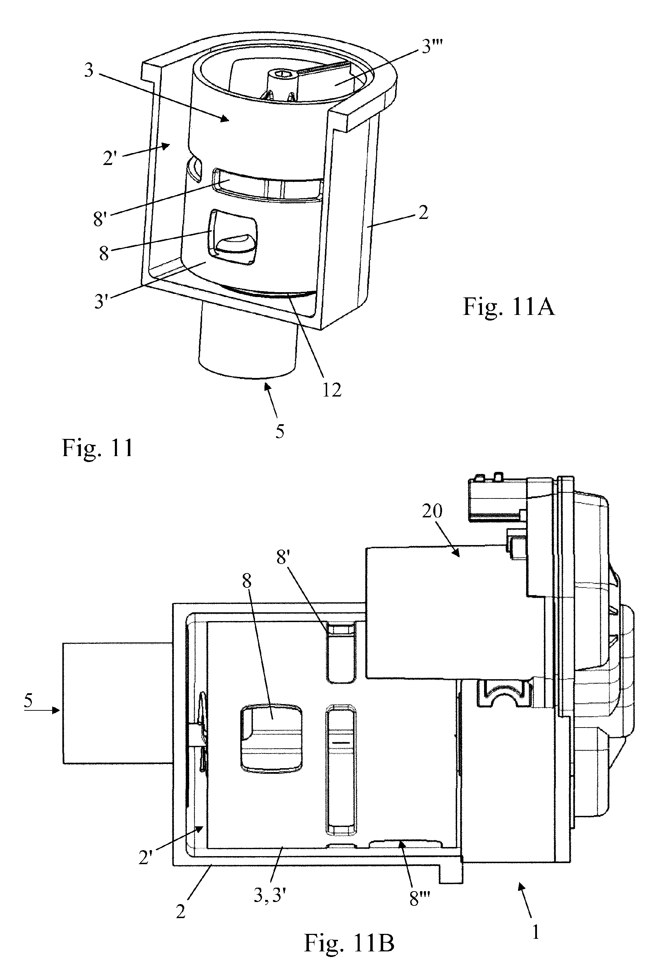

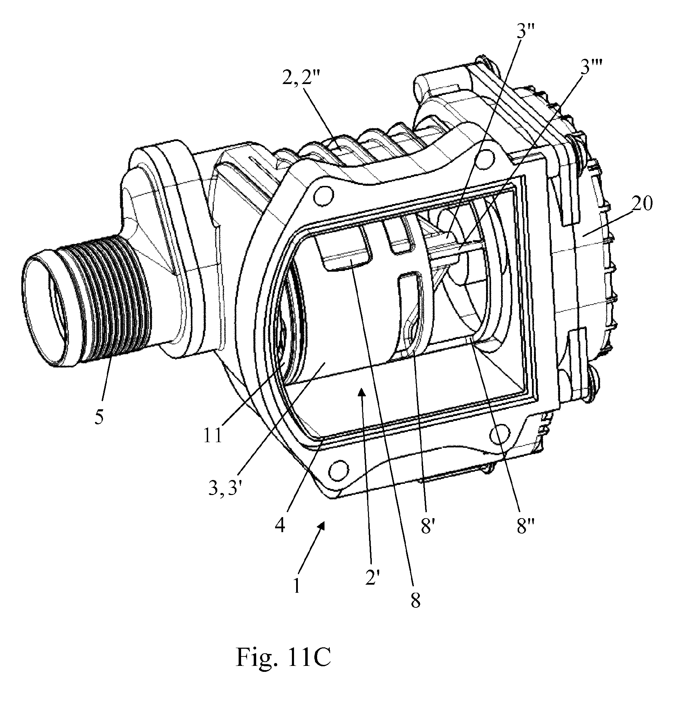

Les figures 1 à 5, 8, 11 et 12 illustrent une vanne 1 de distribution et de régulation de fluide, essentiellement constituée par un corps de vanne 2 creux définissant une chambre intérieure 2' et par un boisseau 3 creux dont la face externe de la paroi 3' définit au moins partiellement une surface de révolution et qui est monté avec faculté de rotation autour de son axe médian AB dans la chambre 2' dudit corps de vanne 2. Le corps de vanne 2 comporte une première ouverture latérale ou radiale 4 pour l'entrée ou la sortie de fluide dans ou de la chambre 2', dont le passage n'est pas contrôlé par le boisseau 3, et au moins une ouverture axiale 5 et au moins des deuxième et troisième ouvertures radiales ou latérales 6, 7 pour la sortie ou l'entrée de fluide de ou dans la chambre, dont les passages sont contrôlés par le boisseau 3 et dépendent de la position en rotation de ce dernier. La paroi 3' du boisseau est pourvue de découpes 8, 8' pouvant être positionnées en regard des deuxième et troisième ouvertures radiales 6 et 7 par rotation dudit boisseau 3 et déterminant des séquences d'ouverture et de fermeture desdites ouvertures radiales en fonction du déplacement en rotation du boisseau 3.

Préférentiellement, et comme illustré sur les figures précitées, la face externe de la paroi 3' présente une surface de révolution sensiblement sur l'ensemble de sa périphérie (à l'exception des découpes 8, 8', 8"), ladite paroi 3' présentant avantageusement une forme cylindrique à section circulaire (Figures 1 à 5, 8 et 11).

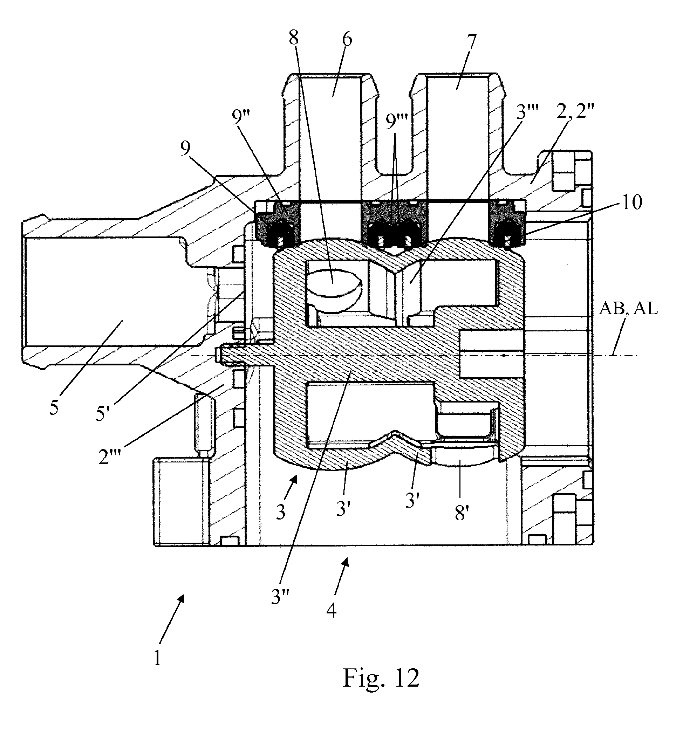

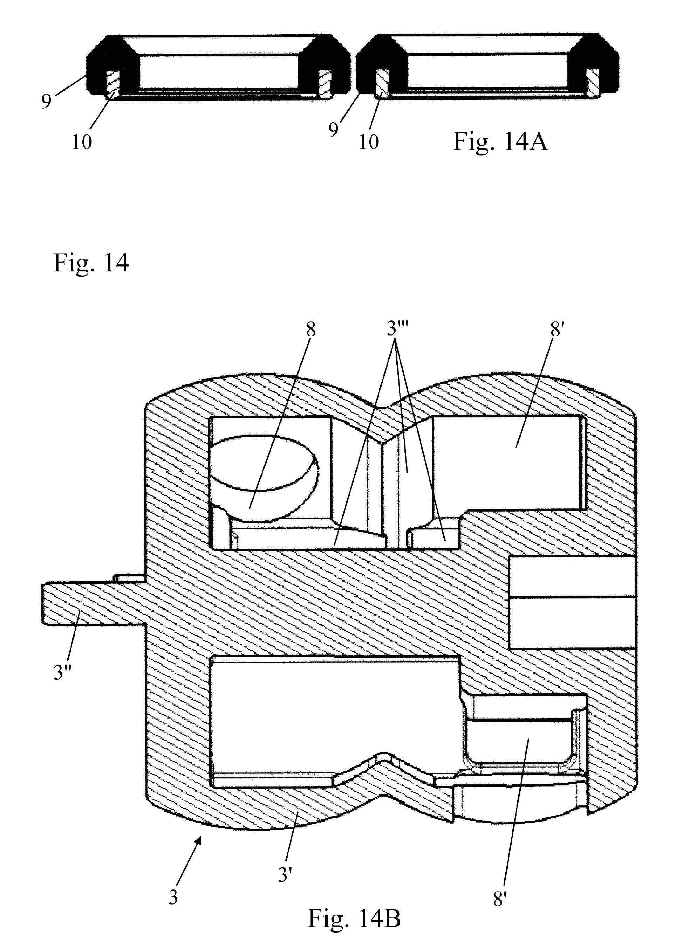

Toutefois, cette paroi 3' peut également comporter des portions de face extérieure de forme sphérique (par exemple séparées ou non par des portions de forme cylindrique), comme le montrent par exemple les figures 12 à 14, ou encore de forme torique, conique, en gradins ou analogue (non représenté).

Lorsque le boisseau 3 est essentiellement creux, et formé à partir de la paroi périphérique 3', le corps du boisseau 3 peut comporter, comme le montrent les figures des dessins annexés, des parois internes 3"' pour une liaison rigide avec le palier de l'arbre 3" et un renforcement structurel de la paroi circonférentielle 3'. Ces parois 3"' peuvent également jouer un rôle dans la circulation du fluide dans la chambre 2' et dans le corps du boisseau 3, en favorisant, en canalisant ou en perturbant la circulation dans certaines directions ou vers certaines ouvertures.

Toutefois, selon une variante non représentée, le boisseau 3 peut également être formé par creusement d'un corps plein en vue de réaliser les découpes 8, 8', 8" et les chemins de circulation internes les reliant entre elles.

Conformément à l'invention, la paroi cylindrique 3' du boisseau 3 est située radialement à distance de la paroi 2" du corps de vanne 2. De plus, les deuxième et troisième ouvertures radiales 6 et 7 comportent des moyens d'étanchéité 9, 10 faisant saillie dans la chambre de distribution 2' et venant en appui glissant sous contrainte sur ladite paroi cylindrique 3' du boisseau 3. Et, enfin, ledit boisseau 3 est pourvu, en regard de l'ouverture axiale 5, d'une plaque rapportée 11 pourvue d'au moins une découpe 11' et venant en appui étanche sous contrainte sur un insert ou une contre-plaque ajouré(e) 12 délimitant et/ou entourant au moins les contours de l'entrée 5' de l'ouverture axiale 5 débouchant dans la chambre de distribution 2'.

Ainsi, l'invention met en oeuvre deux constructions différentes pour la réalisation des étanchéités au niveau de la sortie axiale 5, d'une part, et des sorties radiales 6 et 7, d'autre part.

La mise en oeuvre de moyens d'étanchéité 9, 10 glissants et en appui sous contrainte sur la paroi cylindrique 3' du boisseau 3 permet de garantir une conservation de l'étanchéité dans le temps tout en limitant le frottement et donc le couple nécessaire à la rotation dudit boisseau 3.

De plus, la prévision d'une plaque rapportée 11 au niveau du boisseau 3 et d'un insert ou d'une contre-plaque 12 autour de l'ouverture axiale 5 permet de rapporter localement (donc sans renchérir notablement les coûts de fabrication du corps de vanne 2 et du boisseau 3) des matériaux à forte résistance à l'usure par frottement et aptes à réaliser une étanchéité performante par simple contact.

En outre, ce mode de réalisation de l'étanchéité axiale n'impacte pas la qualité de l'étanchéité au niveau des ouvertures radiales et permet également de limiter le couple nécessaire à la rotation du boisseau 3.

La construction de la vanne 1 avec agencement d'un volume interstitiel périphérique entre le corps de vanne 2 et le boisseau 3, combinée à la structure creuse et ajourée dudit boisseau 3 autorise une libre circulation du fluide à réguler dans la totalité de la chambre 2' et permet de supprimer tout contact direct entre les parois 2" et 3' (absence de frottement).

Les séquences de dégagement et d'obturation des ouvertures dont les passages sont régulés (ouverture axiale 5 et ouvertures radiales 6 et 7) sont définies respectivement, d'une part, par les découpes 11' dans la plaque rapportée 11 et l'insert 12 et, d'autre part, par les découpes 8, 8' dans la paroi 3' du boisseau 3, ce en combinaison avec les formes, dimensions et localisation desdites ouvertures 5, 6 et 7. La paroi périphérique 3' du boisseau 3 comporte également des découpes 8", non associées à une ouverture 6, 7 et servant à la communication fluidique entre la chambre 2' et l'intérieur du boisseau 3.

En fonction des séquences d'ouverture/de fermeture à réaliser, en relation avec la position en rotation du boisseau 3, l'homme du métier déterminera les configurations de découpes et d'ouvertures. Des exemples de telles configurations ressortent notamment des documents FR 2 800 125, GB 2 051 311, GB 2 180 323, EP 0 245 068, WO 94/19999 et EP 0 646 853.

De manière avantageuse, les appuis sous contrainte, d'une part, entre les moyens d'étanchéité 9, 10 des deuxième et troisième ouvertures radiales 6, 7 et la paroi 3' du boisseau 3 et, d'autre part, entre la plaque rapportée 11 et l'insert ou contre-plaque 12, résultent de l'action de moyens élastiques 13, 14 respectifs, intégrés (fonctionnellement et/ou structurellement) ou séparés, par exemple du type ressorts.

En relation avec une construction préférée de la vanne 1 ressortant des figures 1, 3, 11 et 12 notamment, le volume d'interstice entre les parois du boisseau 3 et du corps de vanne 2 et le volume intérieur du boisseau 3 creux sont tous deux en communication fluidique avec la première ouverture radiale 4 non contrôlée par le boisseau 3.

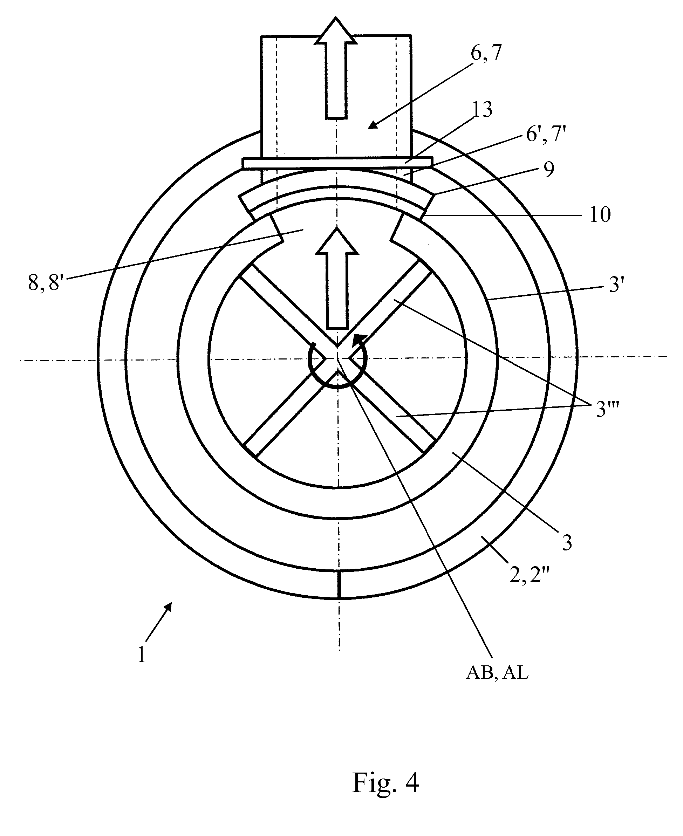

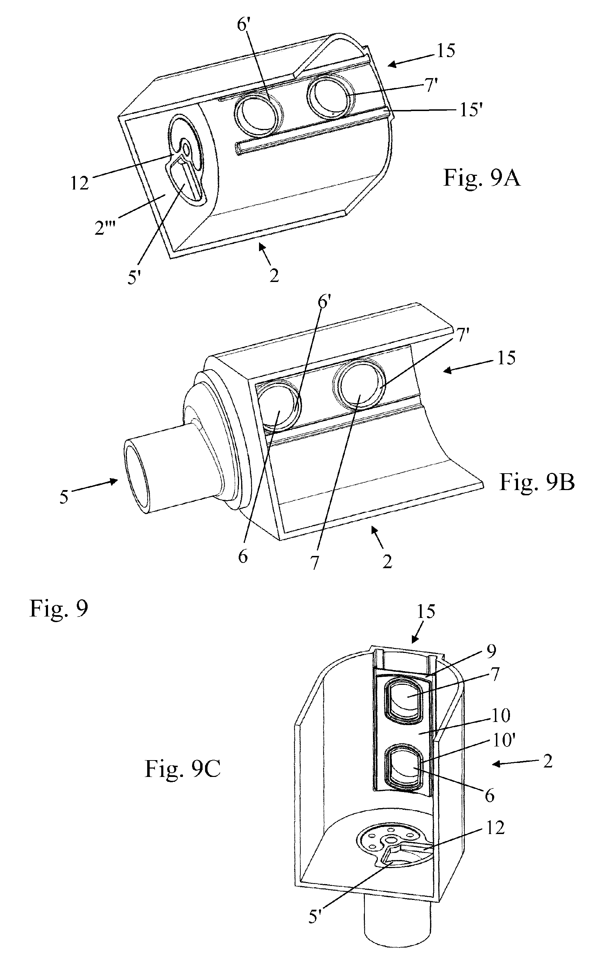

En accord avec une réalisation du corps de vanne 2 d'un seul tenant, par exemple par moulage par injection de matériaux thermoplastiques, évitant la réalisation d'une étanchéité particulière des ouvertures 6 et 7 au niveau de la paroi 2", il peut être prévu, comme le montrent les figures 4, 5, 9A et 9B, que les deuxième et troisième ouvertures radiales 6 et 7 consistent en des portions de conduit traversantes, préférentiellement réalisées d'un seul tenant avec la paroi 2" du corps de vanne 2, et faisant saillie dans la chambre intérieure 2' du corps de vanne 2, et éventuellement au niveau de la face extérieure de ce dernier, les moyens d'étanchéité 9, 10 associés à ces ouvertures 6, 7, et éventuellement des moyens 13 de sollicitation élastique (en direction du boisseau 3), étant rapportés sur les parties intérieures proéminentes 6' et 7' desdites portions de conduit traversantes 6 et 7.

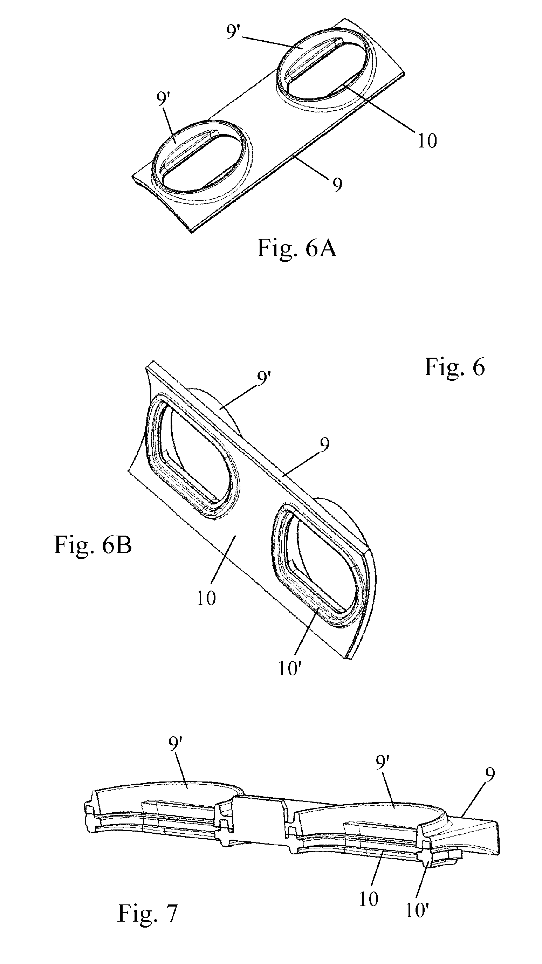

Conformément à une caractéristique de l'invention ressortant des figures 6, 7,t 9C, 12 et 14A, les moyens d'étanchéité rapportés 9, 10 au niveau des deuxième et troisième ouvertures radiales 6, 7 consistent en au moins une pièce ajourée composite ou bi-matière qui comprend une première composante 9 structurelle au moins semi-rigide, servant de support de montage sur le corps de vanne 2, et une seconde composante souple et/ou à faible friction 10 formant joint, destinée à venir en contact glissant avec la face externe de la paroi 3' du boisseau 3. Préférentiellement, la seconde composante 10 est rapportée par emboîtement et collage ou est surmoulée sur la première composante 9 et présente au moins une lèvre, une nervure, un bourrelet ou une formation proéminente analogue 10' définissant le bord interne de l'ouverture radiale 6, 7 correspondante en contact avec le boisseau 3.

La première composante semi-rigide 9 peut, par exemple, être réalisée en EPDM (Ethylène - Propylène - Diène Monomère) et la seconde composante 10 en PTFE (Polytétrafluoroéthylène).

Plus précisément et en accord avec une variante de réalisation ressortant des figures 4, 5, 6 et 7, la ou chaque pièce formant moyens d'étanchéité 9, 10 peut consister en une plaque bi-composante ajourée, préférentiellement avec une surface de contact de forme courbe épousant sensiblement la courbure de la portion en regard de la face externe de la paroi 3' du boisseau 3, ladite ou chaque plaque ajourée 9, 10 étant montée par emboîtement avec faculté de coulissement sur la ou les partie(s) intérieure(s) proéminente(s) 6', 7' de la ou des portion(s) de conduit de la ou des ouverture(s) radiale(s) 6, 7 et en réalisant une étanchéité par rapport à et autour de ces parties 6', 7' (étanchéité de nature statique).

A cet effet, la plaque 9 formant la première composante peut se prolonger, au niveau des ouvertures de passage, par des manchons 9' de faible longueur. Les courbures respectivement connexe et concave de la paroi 3' et de la pièce 9, 10 peuvent être des courbures simples (unidirectionnelles) lorsque le boisseau 3 est entièrement cylindrique, ou des courbures complexes (bidirectionnelles) lorsque la portion de paroi 3' venant en contact de la pièce 9, 10 présente une surface partiellement sphérique ou torique et qu'un contact au moins partiellement surfacique est recherché, avec une ouverture pas nécessairement circulaire.

Un moyen élastique 13 séparé, par exemple une lame ressort, peut être monté entre le corps de vanne 2 et ladite ou chaque plaque 9, 10 ajourée, de manière à la solliciter en direction de la paroi 3' du boisseau 3.

En variante, le moyen élastique 13 peut également être au moins partiellement intégré (structurellement) dans le matériau de la première composante, par exemple par surmoulage.

Enfin, le moyen élastique 13 peut également être fonctionnellement intégré dans la première composante 9 par une conformation adaptée de cette dernière, résultant en un effet ressort ou en une possibilité de déformation élastique au montage de cette composante 9.

Préférentiellement, il peut être prévu que les deuxième et troisième ouvertures radiales 6, 7 du corps de vanne 2 soient situées à proximité l'une de l'autre, préférentiellement alignées selon la direction de l'axe de rotation AB du boisseau et de l'axe longitudinal AL du corps de vanne 2. Il peut éventuellement également être prévu que les moyens d'étanchéité 9, 10 des deux ouvertures radiales précitées 6 et 7 consistent en une unique plaque bi-composante doublement ajourée, la face interne de la paroi 2" du corps de vanne 2 comportant une zone renfoncée 15 pour le logement calé, éventuellement avec emboîtement ou engagement mécanique du moyen élastique 13 et de la composante structurelle rigide 9 de ladite plaque 9, 10 (Figures 6 et 7).

Le montage avec blocage et calage de la plaque 9, 10 peut, par exemple, être obtenu en prévoyant des rainures ou des crans 15' opposé(e)s (au niveau de la zone 15), dans lesquel(le)s les bords latéraux opposés de ladite plaque peuvent venir en engagement, le montage pouvant être réalisé par introduction axiale (direction AL) ou radiale.

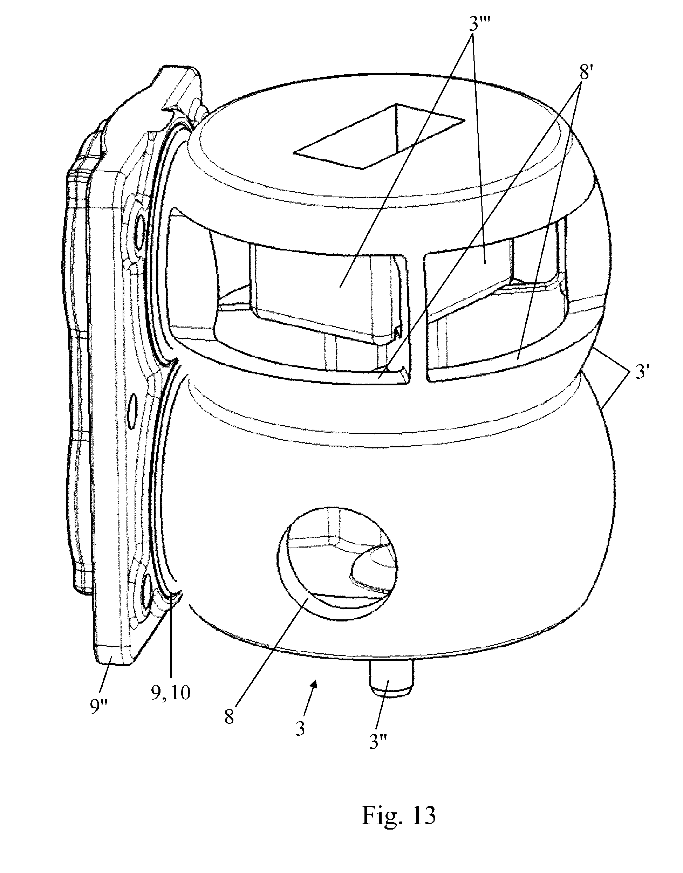

En accord avec une autre variante de réalisation des moyens d'étanchéité radiale, ressortant en particulier des figures 12 et 13, adapté notamment à un boisseau 3 avec des portions de surface extérieure incurvée de révolution, il peut être prévu que les deux ouvertures radiales 6 et 7 à passage contrôlé débouchent de manière affleurante dans la chambre 2' au niveau d'une zone renfoncée 15 de la paroi 2" du corps de vanne 2, en étant préférentiellement prolongée sur la face extérieure du corps de vanne 2 par des embouts, et en ce que les moyens d'étanchéité 9, 10 desdites ouvertures radiales 6 et 7 consistent chacun en un ensemble annulaire composite ou bi-composant comprenant, d'une part, un anneau d'étanchéité souple 10 destiné à venir en contact étanche glissant avec la surface externe de la paroi 3' du boisseau 3 et, d'autre part, un anneau support 9 plus rigide dans lequel est monté l'anneau d'étanchéité 10, lesdits ensembles 9, 10 venant en appui sous contrainte élastique sur la paroi 3' et étant logés dans des rainures adaptées 9"' d'une pièce 9" en forme de plaque, montée en appui étanche sur la face interne de la paroi 2" du corps de vanne 2 autour des ouvertures 6 et 7 et en prolongeant ces derniers dans la chambre 2'.

Les bagues support 9 comprimées élastiquement dans les rainures 9"' de la plaque 9" peuvent constituer ainsi également les moyens élastiques 13. En variante, ces derniers peuvent résulter d'une déformation élastique de la plaque 9", montée sous contrainte dans le renfoncement 15 (au niveau de rainures adaptées).

Selon une caractéristique de l'invention ressortant notamment des figures 1, 3, 8 et 11, la plaque 11 rapportée sur le boisseau 3 et solidaire en rotation avec ce dernier est avantageusement sollicitée par contrainte élastique, par exemple sous l'action d'un ou de plusieurs ressort(s) 14, en contact intime contre l'insert ou la contre-plaque ajouré(e) 12 monté(e) dans la partie 2"' de la paroi 2" du corps de vanne 2 comportant l'ouverture axiale 5.

Préférentiellement, l'étanchéité entre la plaque rapportée 11 du boisseau 3 et l'insert ou la contre-plaque 12 est réalisée par contact surfacique intime, les surfaces 11", 12" en contact de ces deux composants étant des surfaces rectifiées.

Afin de présenter une bonne résistance à l'usure, la plaque rapportée 11 et l'insert ou la contre-plaque 12 consistent en des plaques en un matériau métallique ou céramique.

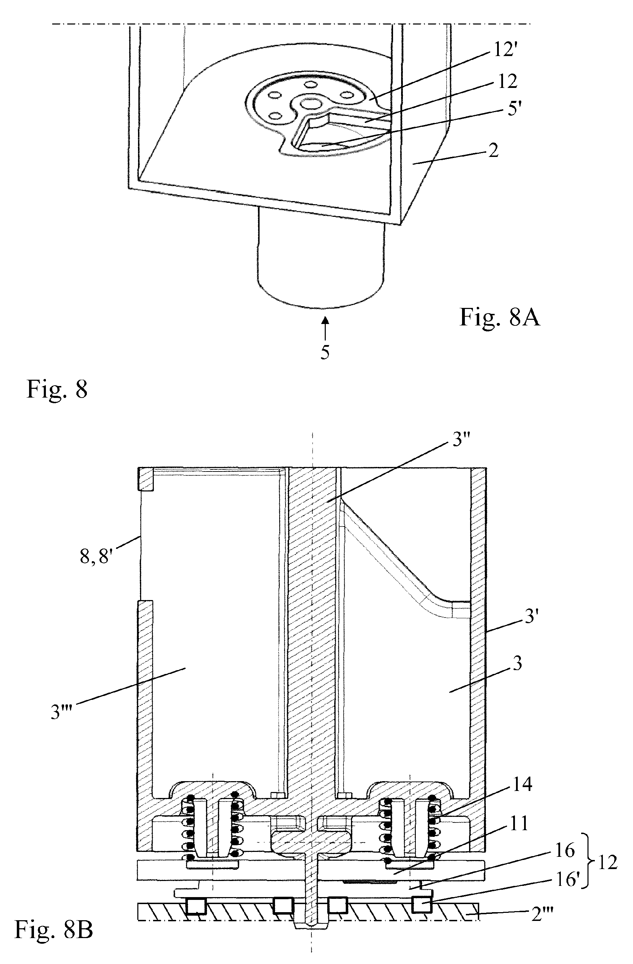

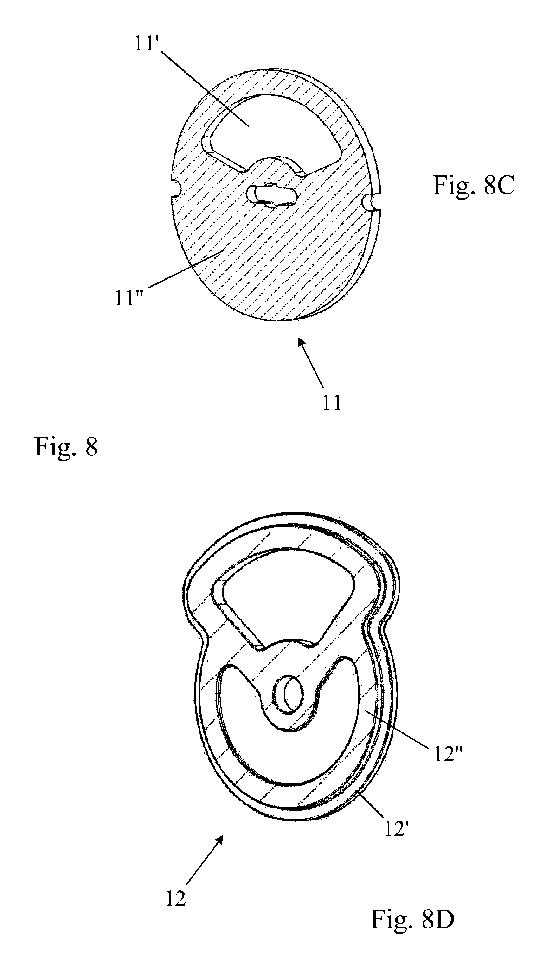

De plus, la surface rectifiée de contact 12" de la plaque formant insert 12 correspond à des surfaces proéminentes entourant l'ouverture axiale 5, et éventuellement à des surfaces d'appui circonférentielles pour un déplacement en rotation en appui équilibré et constant sur l'insert 12 de ladite plaque rapportée 11 autour de l'axe de rotation AB du boisseau 3 (voir figures 8).

Selon une première variante de réalisation ressortant des figures 1 et 8A, l'insert 12, sous forme de plaque métallique ou céramique, est intégré par surmoulage dans la partie 2"' de la paroi 2" du corps de vanne 2 comportant l'ouverture axiale 5. Afin de favoriser l'accrochage de la matière surmoulée (matière formant la portion de paroi 2" du corps de vanne 2 comportant l'ouverture axiale 5) avec l'insert 12, ce dernier comporte avantageusement un épaulement périphérique 12' (voir figure 8D).

Selon une seconde variante de réalisation de l'invention ressortant de la figure 8B, la contre-plaque 12 présente une structure composite et se présente sous la forme d'une plaque métallique ou céramique 16 associée à des formations de joints d'étanchéité 16' rapportées en sous-face ou venant séparément en appui en sous-face, ces formations 16' étant intégrées de manière étanche dans la partie 2"' de paroi 2" du corps de vanne 2 comportant l'ouverture axiale 5.

En accord avec un autre mode de réalisation de l'invention illustré par la figure 2, il peut être prévu que la plaque rapportée 11 présente une structure composite et soit constituée par une plaque de base 17 rigide recouverte d'un matériau 17' à faible coefficient de friction sur sa face dirigée vers et en contact avec l'insert ou la contre-plaque 12.

En variante, la plaque rapportée 11 peut également consister en une pièce monobloc en un matériau présentant des propriétés tribologiques adaptées ou en un matériau plastique rigide (par exemple du PPS - Polysulfure de phénylène - ou du PPA - Polyphtalamide) intégrant des charges d'un matériau (par exemple du PTFE) qui peut assurer un contact étanche et à faible coefficient de friction.

De plus, toujours en relation avec le mode de réalisation de la figure 2, ledit insert ou ladite contre-plaque 12 peut se présenter sous la forme d'un motif de joint d'étanchéité 18, 18' intégré dans la partie 2"' de paroi 2" du corps de vanne 2 comportant l'ouverture axiale 5, par exemple un motif de joint à structure composite avec une armature de base 18 en un matériau semi-rigide ou souple (par exemple de l'EPDM) intégrée par fixation dans des rainures ou par surmoulage dans ladite partie 2"' de paroi 2" et un arrangement de nervures ou de bourrelets 18' en un matériau à faible coefficient de friction (par exemple du PTFE) superposé sur ladite armature 18 (par exemple par accrochage, collage ou surmoulage).

On retrouve ainsi une configuration similaire à celle décrite précédemment pour l'étanchéité au niveau des ouvertures radiales 6 et 7, la composante 18 assurant l'étanchéité statique (avec la paroi 2") et la composante 18' l'étanchéité dynamique (avec la plaque mobile 11). De manière alternative, les nervures ou bourrelets 18' en matériau souple et/ou à faible coefficient de friction peuvent être surmoulé(e)s directement dans des rainures ou sur des structures saillantes de la paroi 2".

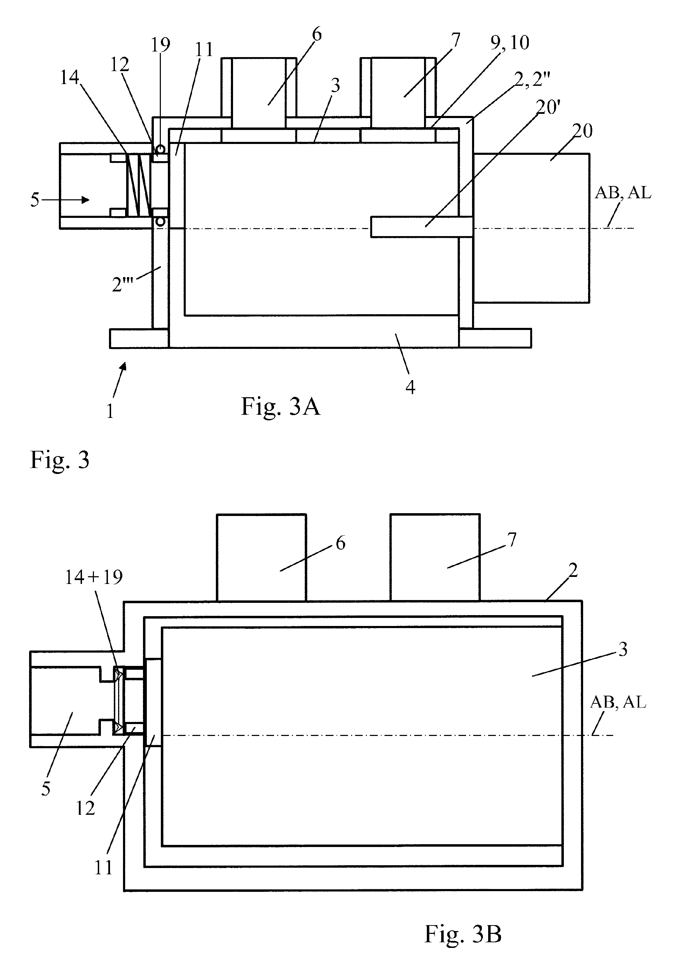

En accord avec un mode de réalisation supplémentaire de l'invention représenté à la figure 3, l'insert 12 peut se présenter sous la forme d'une bague montée dans l'ouverture axiale 5 et sollicité élastiquement contre la plaque rapportée 11 montée rigidement sur l'extrémité en regard du boisseau 3, les surfaces 11' et 12' mutuellement en contact de l'insert et de la plaque rapportée étant des surfaces rectifiées ou recouvertes d'un matériau avec des caractéristiques tribologiques adaptées (par exemple du PTFE).

Plus précisément et de manière avantageuse, la bague 12 formant insert et la plaque rapportée 11 sont réalisées en un matériau céramique ou métallique, ou encore un matériau plastique rigide (par exemple du PPS ou du PPA) chargé ou recouvert d'un matériau à faible coefficient de friction (par exemple du PTFE). La bague 12 peut en variante également présenter une constitution composite telle que par exemple une bague support en inox associée à une bague d'étanchéité (en contact avec la plaque 11) en PTFE. La bague 12 peut aussi être entièrement réalisée en PTFE.

Préférentiellement, ladite bague 12 est montée avec une étanchéité périphérique 19 dans l'ouverture axiale 5 et ladite bague 12 est installée avec faculté de translation dans ladite ouverture axiale 5, un ressort 14 sollicitant ladite bague 12 en direction de la chambre 2' étant présent dans ladite ouverture axiale 5.

Comme le montrent respectivement les figures 3A et 3B, le ressort 14 et le joint d'étanchéité périphérique 19 peuvent soit être séparés (Fig. 3A), soit être fonctionnellement et/ou structurellement intégrés dans un même composant (Fig. 3B).

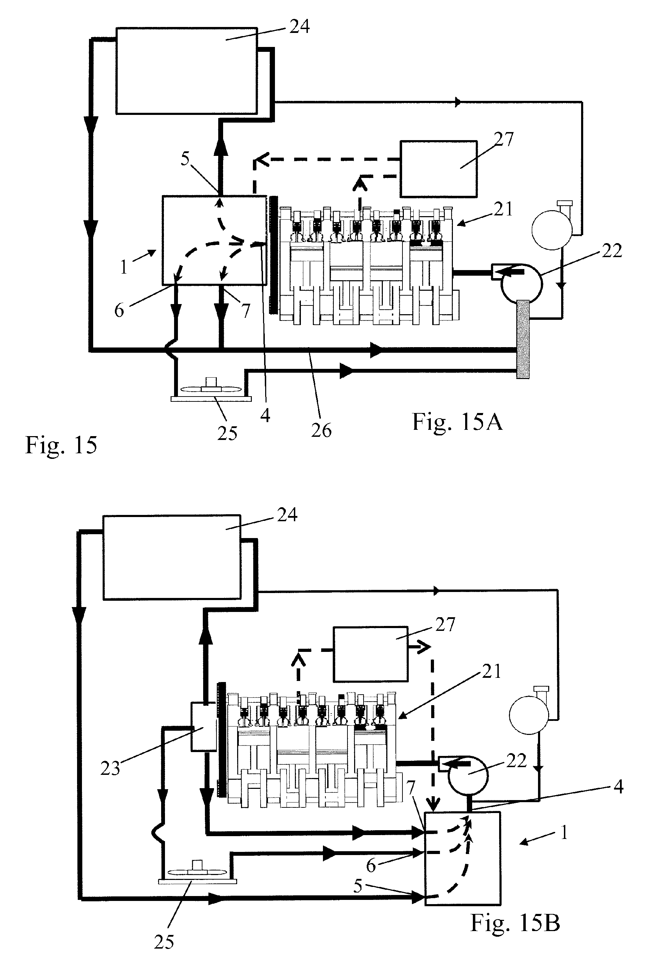

La présente invention a également pour objet, comme le montrent les figures 15A et 15B, un circuit de circulation de liquide de refroidissement d'un moteur à combustion interne 21 comprenant une vanne 1 de distribution et de régulation contrôlant la circulation dudit liquide entre les différentes branches du circuit. Cette vanne est reliée fluidiquement, d'une part, par au moins une ouverture 4, 5, 6, 7 à une pompe de circulation 22 et, d'autre part, par au moins une autre ouverture 4, 5, 6, 7 au circuit de refroidissement interne du bloc moteur, éventuellement à travers un boîtier de distribution 23. Ces différentes ouvertures de la vanne 1 sont, en outre, reliées aux différentes branches du circuit qui comprennent, par exemple, une branche alimentant un radiateur 24, une branche alimentant un aérotherme 25 et une branche de dérivation 26.

Conformément à l'invention, la vanne 1, du type vanne trois voies à boisseau rotatif, est une vanne telle que décrite précédemment.

Selon une première configuration, la vanne 1 est reliée par sa première ouverture radiale 4 non contrôlée à la sortie du circuit de refroidissement interne du moteur 21.

Selon une seconde configuration, la vanne 1 est reliée par sa première ouverture radiale 4 non contrôlée à la pompe de circulation 22.

Comme cela ressort des figures 15A et 15B, il peut être également prévu une boucle de pilotage de l'actionneur de la vanne 1, intégrant une unité de gestion 27 commandant l'actionneur de ladite vanne 1 en fonction notamment de données de mesures collectées au niveau du bloc moteur (par exemple température de l'eau) et au niveau du capteur de position intégré au module 20 associé à la vanne.

Enfin, l'invention a également pour objet un procédé de fabrication d'une vanne telle que décrite précédemment.

Ce procédé consiste essentiellement, d'une part, à fabriquer un corps de vanne 2 pourvu des différentes ouvertures axiale 5 et radiales 4, 6, 7 et de l'insert ou de la contre-plaque 12 et, d'autre part, à fabriquer le boisseau 3 et à l'équiper de la plaque rapportée 11 et de ses moyens de sollicitation élastiques 14 associés, à installer les moyens d'étanchéité radiaux 9, 10 et leurs moyens de sollicitation élastique 13 intégrés ou installés dans le corps de vanne 2 et, enfin, à monter le boisseau 3 équipé dans le corps de vanne 2 équipé et à rapporter, de manière étanche, un module 20 capteur de position/actionneur sur le corps de vanne 2, ledit module comportant un arbre d'entraînement 20' venant en engagement rigide et indexé en rotation avec le boisseau 3.

Les moyens d'étanchéité radiaux et axiaux peuvent être réalisés selon l'une quelconque des variantes décrites précédemment.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Vanne de distribution et de régulation de fluide, essentiellement constituée par un corps de vanne creux définissant une chambre intérieure et par un boisseau creux dont la face externe de la paroi définit au moins partiellement une surface de révolution et qui est monté avec faculté de rotation autour de son axe médian dans la chambre dudit corps de vanne, ce corps de vanne comportant une première ouverture latérale ou radiale pour l'entrée ou la sortie de fluide dans ou de la chambre, dont le passage n'est pas contrôlé par le boisseau, et au moins une ouverture axiale et au moins des deuxième et troisième ouvertures radiales ou latérales pour la sortie ou l'entrée de fluide de ou dans la chambre, dont les passages sont contrôlés par le boisseau et dépendent de la position en rotation de ce dernier, la paroi du boisseau étant pourvue de découpes pouvant être positionnées en regard des deuxième et troisième ouvertures radiales par rotation dudit boisseau et déterminant des séquences d'ouverture et de fermeture desdites ouvertures radiales en fonction du déplacement en rotation du boisseau,
la paroi cylindrique (3') du boisseau (3) étant située radialement à distance de la paroi (2") du corps de vanne (2), les deuxième et troisième ouvertures radiales (6 et 7) comportant des moyens d'étanchéité (9, 10) faisant saillie dans la chambre de distribution (2') et venant en appui glissant sous contrainte sur ladite paroi cylindrique (3') du boisseau (3), vanne **caractérisée en ce que** ledit boisseau (3) est pourvu, en regard de l'ouverture axiale (5), d'une plaque rapportée (11) pourvue d'au moins une découpe (11') et venant en appui étanche sous contrainte sur un insert ou une contre-plaque ajouré(e) (12) délimitant et/ou entourant au moins les contours de l'entrée (5') de l'ouverture axiale (5) débouchant dans la chambre de distribution (2').

2. Vanne selon la revendication 1, **caractérisée en ce que** les appuis sous contrainte, d'une part, entre les moyens d'étanchéité (9, 10) des deuxième et troisième ouvertures radiales (6, 7) et la paroi (3') du boisseau (3) et, d'autre part, entre la plaque rapportée (11) et l'insert ou contre-plaque (12), résultent de l'action de moyens élastiques (13, 14) respectifs, intégrés ou séparés.

3. Vanne selon l'une quelconque des revendications 1 et 2, **caractérisée en ce que** le volume d'interstice entre les parois du boisseau (3) et du corps de vanne (2) et le volume intérieur du boisseau (3) creux sont tous deux en communication fluidique avec la première ouverture radiale (4) non contrôlée par le boisseau (3).

4. Vanne selon l'une quelconque des revendications 1 à 3, **caractérisée en ce que** les moyens d'étanchéité rapportés (9, 10) au niveau des deuxième et troisième ouvertures radiales (6, 7) consistent en au moins une pièce ajourée composite ou bi-matière qui comprend une première composante (9) structurelle au moins semi-rigide, servant de support de montage sur le corps de vanne (2), et une seconde composante souple et/ou à faible friction (10) formant joint, destinée à venir en contact glissant avec la face externe de la paroi (3') du boisseau (3), la seconde composante souple (10) étant avantageusement rapportée par emboîtement et collage ou surmoulée sur la première composante (9) et présentant au moins une lèvre, une nervure, un bourrelet ou une formation proéminente extrêmale analogue (10'), laquelle définit le bord interne de l'ouverture radiale (6, 7) correspondante en contact avec le boisseau (3).

5. Vanne selon l'une quelconque des revendications 1 à 4, **caractérisée en ce que** les deuxième et troisième ouvertures radiales (6 et 7) consistent en des portions de conduit traversantes, préférentiellement réalisées d'un seul tenant avec la paroi (2") du corps de vanne (2), et faisant saillie dans la chambre intérieure (2') du corps de vanne (2), et éventuellement au niveau de la face extérieure de ce dernier, les moyens d'étanchéité (9, 10) associés à ces ouvertures (6, 7), et éventuellement des moyens (13) de sollicitation élastique, étant rapportés sur les parties intérieures proéminentes (6' et 7') desdites portions de conduit traversantes (6 et 7).

6. Vanne selon les revendications 4 et 5, **caractérisée en ce que** la ou chaque pièce formant moyens d'étanchéité (9, 10) consiste en une plaque bi-composante ajourée, préférentiellement avec une surface de contact de forme courbe épousant sensiblement la courbure de la portion en regard de la face externe de la paroi (3') du boisseau (3), ladite ou chaque plaque ajourée (9, 10) étant montée par emboîtement avec faculté de coulissement sur la ou les partie(s) intérieure(s) proéminente(s) (6', 7') de la ou des portion(s) de conduit de la ou des ouverture(s) radiale(s) (6, 7) et en réalisant une étanchéité par rapport à et autour de ces parties (6', 7'), un moyen élastique (13) séparé, par exemple une lame ressort, étant éventuellement monté entre le corps de vanne (2) et ladite ou chaque plaque (9, 10) ajourée, de manière à la solliciter en direction de la paroi (3') du boisseau (3).

7. Vanne selon l'une quelconque des revendications 4 à 6, **caractérisée en ce que** les deuxième et troisième ouvertures radiales (6, 7) du corps de vanne (2) sont situées à proximité l'une de l'autre, préférentiellement alignées selon la direction de l'axe de rotation (AB) du boisseau et de l'axe longitudinal (AL) du corps de vanne (2), et **en ce que** les moyens d'étanchéité (9, 10) des deux ouvertures radiales précitées (6 et 7) consistent en une unique plaque bi-composante doublement ajourée, la face interne de la paroi (2") du corps de vanne (2) comportant une zone renfoncée (15) pour le logement calé, éventuellement avec emboîtement ou engagement mécanique du moyen élastique (13) et de la composante structurelle rigide (9) de ladite plaque (9, 10).

8. Vanne selon l'une quelconque des revendications 4 et 7, **caractérisée en ce que** les deux ouvertures radiales (6 et 7) à passage contrôlé débouchent de manière affleurante dans la chambre (2') au niveau d'une zone renfoncée (15) de la paroi (2") du corps de vanne (2), en étant préférentiellement prolongée sur la face extérieure du corps de vanne (2) par des embouts, et **en ce que** les moyens d'étanchéité (9, 10) desdites ouvertures radiales (6 et 7) consistent chacun en un ensemble annulaire composite ou bi-composant comprenant, d'une part, un anneau d'étanchéité souple (10) destiné à venir en contact étanche glissant avec la surface externe de la paroi (3') du boisseau (3) et, d'autre part, un anneau support (9) plus rigide dans lequel est monté l'anneau d'étanchéité (10), lesdits ensembles (9, 10) venant en appui sous contrainte élastique sur la paroi (3') et étant logés dans des rainures adaptées (9"') d'une pièce (9") en forme de plaque, montée en appui étanche sur la face interne de la paroi (2") du corps de vanne (2) autour des ouvertures (6 et 7) et en prolongeant ces derniers dans la chambre (2').

9. Vanne selon l'une quelconque des revendications 1 à 8, **caractérisée en ce que** la plaque (11) rapportée sur le boisseau (3) et solidaire en rotation avec ce dernier est sollicitée par contrainte élastique, par exemple sous l'action d'un ou de plusieurs ressort(s) (14), en contact intime contre l'insert ou la contre-plaque ajouré(e) (12) monté(e) dans la partie (2"') de la paroi (2") du corps de vanne (2) comportant l'ouverture axiale (5).

10. Vanne selon la revendication 9, **caractérisée en ce que** l'étanchéité entre la plaque rapportée (11) du boisseau (3) et l'insert ou la contre-plaque (12) est réalisée par contact surfacique intime, les surfaces (11", 12") en contact de ces deux composants étant des surfaces rectifiées.

11. Vanne selon la revendication 10, **caractérisée en ce que** la plaque rapportée (11) et l'insert ou la contre-plaque (12) consistent en des plaques en un matériau métallique ou céramique, la surface rectifiée de contact (12") de la plaque formant insert (12) correspondant à des surfaces proéminentes entourant l'ouverture axiale (5), et éventuellement à des surfaces d'appui circonférentielles pour un déplacement en rotation en appui équilibré et constant sur l'insert (12) de ladite plaque rapportée (11) autour de l'axe de rotation (AB) du boisseau (3).

12. Vanne selon la revendication 11, **caractérisée en ce que** l'insert (12), sous forme de plaque métallique ou céramique, est intégré par surmoulage dans la partie (2"') de la paroi (2") du corps de vanne (2) comportant l'ouverture axiale (5).

13. Vanne selon la revendication 11, **caractérisée en ce que** la contre-plaque (12) présente une structure composite et se présente sous la forme d'une plaque métallique ou céramique (16) avec des formations de joints d'étanchéité (16') rapportées en sous-face, ces formations (16') étant intégrées de manière étanche dans la partie (2"') de paroi (2") du corps de vanne (2) comportant l'ouverture axiale (5).

14. Vanne selon la revendication 9, **caractérisée en ce que** la plaque rapportée (11) présente une structure composite et est constituée par une plaque de base (17) rigide recouverte d'un matériau (17') à faible coefficient de friction sur sa face dirigée vers et en contact avec l'insert ou la contre-plaque (12).

15. Vanne selon la revendication 9, **caractérisée en ce que** la plaque rapportée consiste en une pièce monobloc réalisée en un matériau présentant des propriétés tribologiques adaptées ou en un matériau plastique rigide intégrant des charges d'un matériau apte à assurer un contact étanche et à faible coefficient de friction.

16. Vanne selon l'une quelconque des revendications 14 et 15, **caractérisée en ce que** ledit insert ou ladite contre-plaque (12) se présente sous la forme d'un motif de joint d'étanchéité (18, 18') intégré dans la partie (2"') de paroi (2") du corps de vanne (2) comportant l'ouverture axiale (5), par exemple un motif de joint à structure composite avec une armature de base (18) en un matériau semi-rigide ou souple, intégrée par fixation dans des rainures ou par surmoulage dans ladite partie (2"') de paroi (2") et un arrangement de nervures ou de bourrelets (18') en un matériau à faible coefficient de friction superposé sur ladite armature (18).

17. Vanne selon l'une quelconque des revendications 1 à 8, **caractérisée en ce que** l'insert (12) se présente sous la forme d'une bague montée dans l'ouverture axiale (5) et sollicité élastiquement contre la plaque rapportée (11) montée rigidement sur l'extrémité en regard du boisseau (3), les surfaces (11' et 12') mutuellement en contact de l'insert et de la plaque rapportée étant des surfaces rectifiées.

18. Vanne selon la revendication 17, **caractérisée en ce que** ladite bague (12) est montée avec une étanchéité périphérique (19) dans l'ouverture axiale (5) et **en ce que** ladite bague (12) est installée avec faculté de translation dans ladite ouverture axiale (5), un ressort (14) sollicitant ladite bague (12) en direction de la chambre (2') étant présent dans ladite ouverture axiale (5), la bague (12) formant insert et la plaque rapportée (11) étant avantageusement réalisées en un matériau céramique ou métallique, ou encore un matériau plastique rigide chargé ou recouvert d'un matériau à faible coefficient de friction.

19. Circuit de circulation de liquide de refroidissement d'un moteur à combustion interne comprenant une vanne de distribution et de régulation contrôlant la circulation dudit liquide entre les différentes branches du circuit, ladite vanne étant reliée fluidiquement, d'une part, par au moins une ouverture à une pompe de circulation et, d'autre part, par au moins une autre ouverture au circuit de refroidissement interne du bloc moteur,
circuit **caractérisé en ce que** la vanne (1) est une vanne selon l'une quelconque des revendications 1 à 18.

20. Circuit selon la revendication 19, **caractérisé en ce que** la vanne (1) est reliée par sa première ouverture radiale (4) non contrôlée à la sortie du circuit de refroidissement interne du moteur.

21. Circuit selon la revendication 19, **caractérisé en ce que** la vanne (1) est reliée par sa première ouverture radiale (4) non contrôlée à la pompe de circulation.

22. Procédé de fabrication d'une vanne selon l'une quelconque des revendications 1 à 18, **caractérisé en ce qu'**il consiste essentiellement, d'une part, à fabriquer un corps de vanne (2) pourvu des différentes ouvertures axiale (5) et radiales (4, 6, 7) et de l'insert ou de la contre-plaque (12) et, d'autre part, à fabriquer le boisseau (3) et à l'équiper de la plaque rapportée (11) et de ses moyens de sollicitation élastiques (14) associés, à installer les moyens d'étanchéité radiaux (9, 10) et leurs moyens de sollicitation élastique (13) intégrés ou séparés dans le corps de vanne (2) et, enfin, à monter le boisseau (3) équipé dans le corps de vanne (2) équipé et à rapporter, de manière étanche, un module (20) capteur de position/actionneur sur le corps de vanne (2), ledit module comportant un arbre d'entraînement (20') venant en engagement rigide et indexé en rotation avec le boisseau (3).

## Patentansprüche

1. Verteilungs- und Regulierventil für Fluide, im Wesentlichen bestehend aus einem hohlen Ventilkörper, der eine innere Kammer umgrenzt, und aus einem hohlen Hahn, dessen Wandaußenseite mindestens teilweise eine rotationssymmetrische Oberfläche definiert und der um seine Mittelachse drehbar in der Kammer des genannten Ventilkörpers montiert ist, wobei dieser Ventilkörper eine erste seitliche oder radiale Öffnung für Eintritt oder Austritt von Fluid in bzw. aus der Kammer aufweist, deren Durchgang nicht durch den Hahn gesteuert wird, und mindestens eine axiale und mindestens eine zweite und dritte radiale oder seitliche Öffnung für den Austritt oder Eintritt des Fluids aus bzw. in die Kammer, deren Durchgang durch den Hahn gesteuert wird und von der Drehstellung des letztgenannten abhängt, wobei die Wand des Hahns mit Ausschnitten versehen ist, die durch Drehung des genannten Hahns den zweiten und dritten radialen Öffnungen gegenüber angeordnet werden können und Öffnungs- und Schließsequenzen der genannten radialen Öffnungen in Abhängigkeit von der Drehung des Hahns definieren,
wobei die zylindrische Wand (3') des Hahns (3) in radialer Richtung von der Wand (2") des Ventilkörpers (2) beabstandet angeordnet ist, wobei die zweite und dritte radiale Öffnung (6 und 7) Dichtungsorgane (9, 10) aufweisen, die in die Verteilkammer (2') ragen und sich unter Krafteinwirkung gleitend an die genannte zylindrische Wand (3') des Hahns (3) anlegen, Ventil, **dadurch gekennzeichnet, dass** der genannte Hahn (3) gegenüber der axialen Öffnung (5) mit einer angesetzten Platte (11) versehen ist, die mit mindestens einem Ausschnitt (11') versehen ist und sich unter Krafteinwirkung an einen Einsatz oder eine durchbrochene Gegenplatte (12) undurchlässig anlegt, die mindestens die Umrisse des Eingangs (5') der axialen Öffnung (5) umgibt, die in die Verteilkammer (2') mündet.

2. Ventil nach Patentanspruch 1, **dadurch gekennzeichnet, dass** die Krafteinwirkung einerseits zwischen den Dichtungsorganen (9, 10) der zweiten und dritten radialen Öffnung (6, 7) und der Wand (3') des Hahns (3) und andererseits zwischen der angesetzten Platte (11) und dem Einsatz oder der Gegenplatte (12), auf der Einwirkung jeweiliger integrierter oder gesonderter elastischer Organe (13, 14) beruht.

3. Ventil nach irgendeinem der Patentansprüche 1 und 2, **dadurch gekennzeichnet, dass** sowohl der Zwischenraum zwischen den Wänden des Hahns (3) und des Ventilkörpers (2), als auch der Innenraum des hohlen Hahns (3) mit der ersten, durch den Hahn (3) nicht gesteuerten, radialen Öffnung (4) kommunizieren.

4. Ventil nach irgendeinem der Patentansprüche 1 bis 3, **dadurch gekennzeichnet, dass** die im Bereich der zweiten und dritten radialen Öffnung (6, 7) angesetzten Dichtungsorgane (9, 10) aus mindestens einem durchbrochenen Stück aus Verbund- oder Zweikomponentenwerkstoff bestehen, der eine erste mindestens halbstarre Komponente (9) umfasst, die als Träger zur Montage auf dem Ventilkörper (2) dient, und eine zweite nachgiebige und/oder reibungsarme Komponente (10), die als Dichtung dient und dazu bestimmt ist, mit der Außenseite der Wand (3') des Hahns (3) in gleitende Berührung zu kommen, wobei die zweite, nachgiebige Komponente (10) vorteilhafterweise durch Einstecken und Kleben oder Überspritzen auf der ersten Komponente (9) angebracht ist und mindestens eine Lippe, eine Rippe, einen Wulst oder eine ähnliche vorspringende Endform (10') aufweist, die den Innenrand der entsprechenden radialen Öffnung (6, 7) bildet, der mit dem Hahn (3) in Berührung steht.

5. Ventil nach irgendeinem der Patentansprüche 1 bis 4, **dadurch gekennzeichnet, dass** die zweite und dritte radiale Öffnung (6 und 7) aus durchquerenden Leitungsstücken bestehen, vorzugsweise einstückig mit der Wand (2") des Ventilkörpers (2) gefertigt und in die innere Kammer (2') des Ventilkörpers (2) ragend und gegebenenfalls auf dem Niveau der Außenseite des letztgenannten, wobei die zu diesen Öffnungen (6, 7) gehörenden Dichtungsorgane (9, 10) und gegebenenfalls elastische Wirkorgane (13) auf den vorspringenden Innenteilen (6' und 7') der genannten durchquerenden Leitungsstücke (6 und 7) angebracht sind.

6. Ventil nach den Patentansprüchen 4 und 5, **dadurch gekennzeichnet, dass** das oder jedes ein Dichtungsorgan (9, 10) bildende(s) Teil aus einer durchbrochenen Platte aus zwei Komponenten besteht, vorzugsweise mit einer gekrümmten Berührungsfläche, die im Wesentlichen der Krümmung des gegenüberliegenden Wandbereiches der Außenseite der Wand (3') des Hahns (3) folgt, wobei die oder jede durchbrochene Platte (9, 10) durch Aufstecken gleitfähig auf dem oder den vorspringenden Innenteil(en) (6', 7') der oder des Leitungsstücke/s der radialen Öffnung(en) (6, 7) und unter Herstellung einer Abdichtung gegenüber den und um diese Teile (6', 7') montiert ist, wobei gegebenenfalls ein gesondertes elastisches Organ (13), beispielsweise eine Flachfeder, zwischen dem Ventilkörper (2) und der genannten oder jeder durchbrochenen Platte (9, 10) montiert ist, derart, dass sie in Richtung der Wand (3') des Hahns (3) gedrückt wird.

7. Ventil nach irgendeinem der Patentansprüche 4 bis 6, **dadurch gekennzeichnet, dass** sich die zweite und dritte radiale Öffnung (6, 7) des Ventilkörpers (2) nahe beieinander befinden, vorzugsweise in Richtung der Drehachse (AB) des Hahns und der Längsachse (AL) des Ventilkörpers (2) aufgereiht, und dadurch, dass die Dichtungsorgane (9, 10) der beiden genannten radialen Öffnungen (6 und 7) aus einer einzigen, doppelt durchbrochenen Zweikomponentenplatte bestehen, wobei die Innenseite der Wand (2") des Ventilkörpers (2) einen verstärkten Bereich (15) für die festsitzende Aufnahme, gegebenenfalls unter Einstecken oder mechanischem Festsetzen, des elastischen Organs (13) und der starren Komponente (9) der genannten Platte (9, 10) aufweist.

8. Ventil nach irgendeinem der Patentansprüche 4 und 7, **dadurch gekennzeichnet, dass** die beiden genannten radialen Öffnungen (6 und 7) mit gesteuertem Durchtritt fluchtend in einem verstärkten Bereich (15) der Wand (2") des Ventilkörpers (2) in die Kammer (2') münden, während sie sich vorzugsweise an der Außenseite des Ventilkörpers (2) in Ansatzstücken fortsetzen, und dadurch, dass die Dichtungsorgane (9, 10) der genannten radialen Öffnungen (6 und 7) jeweils aus einer ringförmigen Einheit aus Verbund- oder Zweikomponentenwerkstoff bestehen, indem sie einerseits einen nachgiebigen Dichtungsring (10), dazu bestimmt, mit der Außenfläche der Wand (3') des Hahns (3) in undurchlässig gleitenden Kontakt zu kommen, umfassen und andererseits einen starreren Tragring (9), in dem der Dichtungsring (10) montiert ist, wobei sich die genannten Einheiten (9, 10) unter elastischer Krafteinwirkung an die Wand (3') anlegen und in passenden Rillen (9"') eines plattenförmigen Teiles (9") angeordnet sind, das undurchlässig anliegend an der Innenseite der Wand (2") des Ventilkörpers (2) um die Öffnungen (6 und 7) herum montiert ist und diese letztgenannten dabei in die Kammer (2') fortsetzt.

9. Ventil nach irgendeinem der Patentansprüche 1 bis 8, **dadurch gekennzeichnet, dass** die an den Hahn (3) angesetzte Platte (11), die mit diesem gegen Drehungen starr verbunden ist, durch elastische Krafteinwirkung beispielsweise einer oder mehrerer Feder(n) (14), in engen Kontakt mit dem durchbrochenen Einsatz oder der Gegenplatte (12) gebracht wird, der / die im Bereich (2"') der Wand (2") des Ventilkörpers (2), der die axiale Öffnung (5) aufweist, montiert ist.

10. Ventil nach Patentanspruch 9, **dadurch gekennzeichnet, dass** die Dichtung zwischen der angesetzten Platte (11) des Hahns (3) und dem Einsatz oder der Gegenplatte (12) durch engen Oberflächenkontakt hergestellt wird, wobei die in Berührung stehenden Oberflächen (11", 12") dieser beiden Teile maßgeschliffen sind.

11. Ventil nach Patentanspruch 10, **dadurch gekennzeichnet, dass** die angesetzte Platte (11) und der Einsatz oder die Gegenplatte (12) aus Platten aus metallischem oder keramischem Werkstoff bestehen, wobei die maßgeschliffene Berührungsfläche (12") der den Einsatz (12) bildenden Platte, vorspringenden Flächen entspricht, die die axiale Öffnung (5) umgeben, und gegebenenfalls Umfangsanlageflächen für eine Drehbewegung um die Drehachse (AB) des Hahns (3) unter gleichmäßigem und konstantem Andruck an den Einsatz (12) der genannten angesetzten Platte (11).

12. Ventil nach Patentanspruch 11, **dadurch gekennzeichnet, dass** der Einsatz (12) in Form einer metallischen oder keramischen Platte durch Überspritzen in den Bereich (2"') der Wand (2") des Ventilkörpers (2), die die axiale Öffnung (5) aufweist, integriert ist.

13. Ventil nach Patentanspruch 11, **dadurch gekennzeichnet, dass** die Gegenplatte (12) eine Verbundstruktur aufweist und die Form einer metallischen oder keramischen Platte (16) mit auf der Unterseite angebrachten Dichtungsanordnungen (16') hat, wobei diese Anordnungen (16') in dichtender Weise in den Bereich (2"') der Wand (2") des Ventilkörpers (2), die die axiale Öffnung (5) aufweist, integriert sind.

14. Ventil nach Patentanspruch 9, **dadurch gekennzeichnet, dass** die angesetzte Platte (11) eine Verbundstruktur aufweist und aus einer starren Grundplatte (17) besteht, die auf ihrer dem Einsatz oder der Gegenplatte (12) zugewandten und diese berührenden Seite mit einem Werkstoff (17') mit niedrigem Reibungskoeffizienten beschichtet ist.

15. Ventil nach Patentanspruch 9, **dadurch gekennzeichnet, dass** die angesetzte Platte einstückig aus einem Werkstoff gefertigt ist, der passende Reibungseigenschaften aufweist, oder aus einem starren Kunststoff, der Füllzusätze eines Werkstoffes enthält, der geeignet ist, einen undurchlässigen Kontakt mit geringem Reibungskoeffizienten sicherzustellen.

16. Ventil nach irgendeinem der Patentansprüche 14 und 15, **dadurch gekennzeichnet, dass** der genannte Einsatz oder die genannte Gegenplatte (12) die Form eines Dichtungsmusters (18, 18') aufweist, das in den Bereich (2"') der Wand (2") des Ventilkörpers (2), die die axiale Öffnung (5) aufweist, integriert ist, beispielsweise ein Verbundwerkstoff-Dichtungsmotiv mit einer Grundbewehrung (18) aus einem halbstarren oder nachgiebigen Werkstoff, der durch Befestigung in Rillen oder Überspritzen in den genannten Bereich (2"') der Wand (2") integriert ist, und eine Anordnung von Rippen oder Wülsten (18') aus einem Werkstoff mit geringem Reibungskoeffizienten, die auf der genannten Bewehrung (18) ruht.

17. Ventil nach irgendeinem der Patentansprüche 1 bis 8, **dadurch gekennzeichnet, dass** der Einsatz (12) die Form eines Ringes hat, der in die axiale Öffnung (5) montiert ist und elastisch gegen die angesetzte Platte (11) gedrückt wird, die an dem dem Hahn (3) zugewandten Ende starr montiert ist, wobei die Oberflächen (11' und 12'), die mit dem Einsatz und der angesetzten Platte in Berührung stehen, maßgeschliffene Oberflächen sind.

18. Ventil nach Patentanspruch 17, **dadurch gekennzeichnet, dass** der genannte Ring (12) mit einer Umfangsdichtung (19) in der axialen Öffnung (5) montiert ist und dadurch, dass der genannte Ring (12) verschiebbar in der genannten axialen Öffnung (5) installiert ist, wobei eine Feder (14) den genannten Ring (12) in Richtung der Kammer (2') drückt, die in der genannten axialen Öffnung (5) anwesend ist, wobei der Ring (12) einen Einsatz bildet und die angesetzte Platte (11) vorteilhafterweise aus einem keramischen oder metallischen Werkstoff gefertigt ist, oder auch aus einem starren Kunststoff, gefüllt oder beschichtet mit einem Werkstoff mit niedrigem Reibungskoeffizienten.

19. Kühlflüssigkeitskreislauf eines Verbrennungsmotors, ein Verteilungs- und Regelventil umfassend, das die Strömung der genannten Flüssigkeit durch die verschiedenen Zweige des Kreislaufes steuert, wobei das genannte Ventil einerseits durch mindestens eine Öffnung mit einer Umwälzpumpe und andererseits durch mindestens eine andere Öffnung mit dem inneren Kühlkreislauf des Motorblocks kommuniziert,
Kreislauf, **dadurch gekennzeichnet, dass** das Ventil (1) ein Ventil nach irgendeinem der Patentansprüche 1 bis 18 ist.

20. Kreislauf nach Patentanspruch 19, **dadurch gekennzeichnet, dass** das Ventil (1) durch seine erste ungesteuerte radiale Öffnung (4) mit dem Ausgang des inneren Kühlkreislaufes des Motors verbunden ist.

21. Kreislauf nach Patentanspruch 19, **dadurch gekennzeichnet, dass** das Ventil (1) durch seine erste ungesteuerte radiale Öffnung (4) mit der Umwälzpumpe verbunden ist.

22. Verfahren zur Herstellung eines Ventils nach irgendeinem der Patentansprüche 1 bis 18, **dadurch gekennzeichnet, dass** es im Wesentlichen darin besteht, einerseits einen Ventilkörper (2) zu fertigen, der mit den verschiedenen axialen (5) und radialen (4, 6, 7) Öffnungen und dem Einsatz oder der Gegenplatte (12) versehen ist, und andererseits den Hahn (3) zu fertigen und ihn mit der angesetzten Platte (11) und den ihr zugehörigen elastischen Wirkorganen (14) zu versehen, die radialen Dichtungsorgane (9, 10) und ihre integrierten oder gesonderten elastischen Wirkorgane (13) in den Ventilkörper (2) einzusetzen und schließlich den ausgestatteten Hahn (3) im ausgestatteten Ventilkörper (2) zu montieren und ein Stellungssensor-/ Betätigungsmodul (20) am Ventilkörper (2) abdichtend anzubringen, wobei das genannte Modul eine Antriebswelle (20') aufweist, die in starren und für Drehungen gekoppelten Eingriff mit dem Hahn (3) gelangt.

## Claims

1. Feed and control valve for fluid, essentially formed by a hollow valve body defining an inner chamber and by a hollow fitting, the external face of the wall of which defines at least partially a revolving surface and which is mounted with the ability to rotate around its median axis in the chamber of said valve body, said valve body comprising a first lateral or radial opening for the inlet or outlet of fluid into or out of the chamber, the passage of which is not controlled by the fitting, and at least one axial opening and at least second and third radial or lateral openings for the outlet or inlet of fluid from or into the chamber, the passages of which are controlled by the fitting and depend on the rotational position of the latter, the wall of the fitting being provided with cut-outs which can be positioned opposite the second and third radial openings by rotating said fitting and determining the opening and closing sequences of said radial openings as a function of the rotational displacement of the fitting,
the cylindrical wall (3') of the fitting (3) being located radially at a distance from the wall (2") of the valve body (2), the second and third radial openings (6 and 7) comprising sealing means (9, 10) projecting into the feed chamber (2') and bearing in a sliding manner under constraint on said cylindrical wall (3') of the fitting (3), the valve being **characterised in that** said fitting (3) is provided, opposite the axial opening (5), with an attached plate (11) provided with at least one cut-out (11') and bearing in a sealed manner under constraint on an insert or a punched counter plate (12) delimiting and/or surrounding at least the contours of the inlet (5') of the axial opening (5) opening into the feed chamber (2').

2. Valve according to claim 1, **characterised in that** the bearings are under constraint, on the one hand between the sealing means (9, 10) of the second and third radial openings (6, 7) and the wall (3') of the fitting (3) and on the other hand between the attached plate (11) and the insert or counter plate (12), from the action of respective, integrated or separated resilient means (13, 14).

3. Valve according to either claim 1 or claim 2, **characterised in that** the volume of the gap between the walls of the fitting (3) and the valve body (2) and inner volume of the hollow fitting (3) are both in fluid communication with the first radial opening (4) not controlled by the fitting (3).

4. Valve according to any of claims 1 to 3, **characterised in that** the attached sealing means (9, 10) of the second and third radial openings (6, 7) consist of at least one composite or two-material punched part, which comprises a first structural at least semi-rigid component (9), used as a mounting support on the valve body (2), and a second component that is flexible and/or has low friction (10) forming a seal designed to come into sliding contact with the external face of the wall (3') of the fitting (3), the second flexible component (10) being preferably attached by fitting and adhering or moulded onto the first component (9) and having at least one lip, rib, beading or a similar outer protruding form (10'), which defines the internal edge of the corresponding radial opening (6, 7) in contact with the fitting (3).

5. Valve according to any of claims 1 to 4, **characterised in that** the second and third radial openings (6 and 7) consist of traversing pipe portions, preferably formed in one piece with the wall (2") of the valve body (2), and protruding into the inner chamber (2') of the valve body (2), and possibly the outer face of the latter, the sealing means (9, 10) associated with said openings (6, 7) and possibly means (13) of resilient pressure, being attached onto the protruding inner parts (6' and 7') of said portions of traversing pipe (6 and 7).

6. Valve according to claims 4 and 5, **characterised in that** the or each part forming the sealing means (9, 10) consists of a punched two-component plate, preferably with a contact surface in the form of a curve essentially matching the curvature of the portion opposite the external face of the wall (3') of the fitting (3), said or each punched plate (9, 10) being mounted by fitting with the ability to slide on the inner protruding part or parts (6', 7') of the portion or portions of pipe of the radial opening(s) (6, 7) and by forming a seal in relation to and around said parts (6', 7'), a separate resilient means (13), for example a spring blade, being possibly mounted between the valve body (2) and said or each punched plate (9, 10), in order to push it in the direction of the wall (3') of the fitting (3).

7. Valve according to any of claims 4 to 6, **characterised in that** the second and third radial openings (6, 7) of the valve body (2) are located close to one another, preferably aligned in the direction of the axis of rotation (AB) of the fitting and of the longitudinal axis (AL) of the valve body (2), and **in that** the sealing means (9, 10) of the two aforementioned radial openings (6 and 7) consists of a single double-punched two-component plate, the internal face of the wall (2") of the valve body (2) comprising a reinforced zone (15) for wedged fitting, if necessary with the fitting or mechanical engagement of the elastic means (13) and of the rigid structural component (9) of said plate (9, 10).

8. Valve according to any of claims 4 to 7, **characterised in that** the two radial openings (6 and 7) with a controlled passage open in a flush manner into the chamber (2') in a reinforced area (15) of the wall (2") of the valve body (2), being preferably extended on the outer face of the valve body (2) by end pieces, and **in that** the sealing means (9, 10) of said radial openings (6 and 7) each consist of a composite or two-component annular assembly, comprising on the one hand a flexible sealing ring (10) designed to come into sliding sealing contact with the external surface of the wall (3') of the fitting (3) and on the other hand a more rigid support ring (9) in which the sealing ring is mounted (10), said assemblies (9, 10) bearing under resilient constraint on the wall (3') and being accommodated in the adapted grooves (9"') of a part (9") in the form of plate, mounted by bearing in a sealing manner on the internal face of the wall (2") of the valve body (2) around the openings (6 and 7) and by extending the latter into the chamber (2').

9. Valve according to any of claims 1 to 8, **characterised in that** the plate (11) attached onto the fitting (3) and joined in rotation with the latter is stressed by elastic restraint, for example by the action of one or more spring(s) (14), in close contact against the insert or the punched counter plate (12) mounted in the part (2"') of the wall (2") of the valve body (2) comprising the axial opening (5).

10. Valve according to claim 9, **characterised in that** the seal between the attached plate (11) of the fitting (3) and the insert or the counter plate (12) is formed by close surface contact, the surfaces (11", 12") in contact with these two components being adapted surfaces.

11. Valve according to claim 10, **characterised in that** the attached plate (11) and the insert or the counter plate (12) consist of plates made from a metal or ceramic material, the adjusted contact surface (12") of the plate forming the insert (12) corresponding to protruding surfaces surrounding the axial opening (5), and possibly to circumferential bearing surfaces for displacement in rotation with balanced and constant bearing on the insert (12) of said attached plate (11) around the axis of rotation (AB) of the fitting (3).

12. Valve according to claim 11, **characterised in that** the insert (12), in the form of a metal or ceramic plate, is integrated by moulding into the part (2"') of the wall (2") of the valve body (2) comprising the axial opening (5).

13. Valve according to claim 11, **characterised in that** the counter plate (12) has a composite structure and is in the form of a metal or ceramic plate (16) with formations of seals (16') attached on the underside, said formations (16') being integrated in a sealing manner into the part (2"') of the wall (2") of the valve body (2) comprising the axial opening (5).

14. Valve according to claim 9, **characterised in that** the attached plate (11) has a composite structure and is formed by a rigid base plate (17) covered with a material (17') with a low coefficient of friction on its face directed towards and in contact with the insert or the counter plate (12).

15. Valve according to claim 9, **characterised in that** the attached plate consists of a monobloc part made from a material with adapted tribological properties or from a rigid plastic material integrating charges of a material able to ensure sealing contact with a low coefficient of friction.

16. Valve according to any of claims 14 and 15, **characterised in that** said insert or said counter plate (12) is in the form of a seal pattern (18, 18') integrated into the part (2"') of the wall (2") of the valve body (2) comprising the axial opening (5), for example a seal pattern with a composite structure with a base armature (18) made from a semi-rigid or flexible material, integrated by securing into grooves or by moulding into said part (2"') of the wall (2") and an arrangement of ribs or beads (18') made from a material with a low coefficient of friction superimposed on said armature (18).

17. Valve according to any of claims 1 to 8, **characterised in that** the insert (12) is in the form of a ring mounted in the axial opening (5) and pushed elastically against the attached plate (11) mounted rigidly on the end opposite the fitting (3), the mutually contacting surfaces (11' and 12') of the insert and the attached plate being adjusted surfaces.

18. Valve according to claim 17, **characterised in that** said ring (12) is mounted with peripheral sealing (19) in the axial opening (5) and **in that** said ring (12) is installed with the ability to translate into said axial opening (5), a spring (14) pushing said ring (12) in the direction of the chamber (2') being provided in said axial opening (5), the ring (12) forming an insert and the attached plate (11) being preferably made from a ceramic or metallic material or even a rigid plastic material charged or covered with a material having a low coefficient of friction.

19. Circuit for the circulation of cooling fluid of an internal combustion engine comprising a feed and control valve for controlling the circulation of said fluid between the different branches of the circuit, said valve being connected fluidically on the one hand by at least one opening to a circulation pump and on the other hand by at least one other opening to the internal cooling circuit of the engine block, said circuit being **characterised in that** the valve (1) is a valve according to any of claims 1 to 18.

20. Circuit according to claim 19, **characterised in that** the valve (1) is connected by its first uncontrolled radial opening (4) to the outlet of the internal cooling circuit of the engine.

21. Circuit according to claim 19, **characterised in that** the valve (1) is connected by its first uncontrolled radial opening (4) to the circulation pump.

22. Method for the manufacture of a valve according to any of claims 1 to 18, **characterised in that** it consists essentially on the one hand of producing a valve body (2) provided with different axial (5) and radial openings (4, 6, 7) and with the insert or the counter plate (12) and on the other hand of producing the fitting (3) and equipping it with the attached plate (11) and its associated resilient stressing means (14), of installing radial sealing means (9, 10) and their resilient stressing means (13) integrated or separated in the valve body (2) and lastly of mounting the fitting (3) provided in the fitted valve body (2) and of applying in a sealed manner a position sensor module (20)/actuator onto the valve body (2), said module comprising a drive shaft (20') being in rigid connection and indexed in rotation with the fitting (3).
